# FASCICULE DE BREVET EUROPEEN

(11) **EP 2 047 345 B1**
(45) Date de publication et mention de la délivrance du brevet: **06.01.2010**
(21) Numéro de dépôt: 07765521.5
(22) Date de dépôt: 20.06.2007
(51) Int. Cl.: G05D 1/02

(54) **PROCEDE DE DETERMINATION DE LIMITES DE ROULAGE D'UN VEHICULE**
VERFAHREN ZUR BESTIMMUNG DER FAHRGRENZEN EINES FAHRZEUGS
METHOD FOR DETERMINING THE DRIVING LIMITS OF A VEHICLE

(30) Priorité: 23.06.2006 FR 0605654
(43) Date de publication de la demande: 15.04.2009
(73) Titulaire: NodBox, 06906 Sophia Antipolis Cedex (FR)
(72) Inventeur: FARGAS, Thierry, 06000 Nice (FR); CLARAC, Dominique, 06000 Nice (FR)
(74) Mandataire: Decobert, Jean-Pascal
(86) Numéro de dépôt international: PCT/EP2007/056155
(87) Numéro de publication internationale: WO 2007/147855

(56) Documents cités:
- DE-A1- 10 258 167
- US-A- 5 742 240
- US-A1- 2002 198 632

## Description

La présente invention concerne un procédé ainsi qu'un dispositif de détermination de limites de roulage d'un véhicule en mouvement sur la bande de roulement d'une voie de circulation routière.

Il s'agit d'un procédé qui permet de caler le lien entre tous types de véhicules et de routes avec les limites de roulage sur ladite route. Ce calage peut être établi à partir des bases de données routières existantes et à partir des caractéristiques des véhicules connus. L'invention permet aussi la création d'un repère ordonnancé multivariable assurant le suivi de la trajectoire d'un véhicule de façon relative et améliorant le positionnement dudit véhicule.

L'invention a également trait à un dispositif qui peut être installé sur n'importe quel véhicule et être couplé à tout système de navigation existant, le dispositif produisant des indicateurs en temps réel de sécurité et de positionnement. Ce dispositif peut par ailleurs être utilisé par les gestionnaires des routes à des fins d'amélioration des moyens de prévention et de protection.

Il n'existe actuellement aucun système capable d'indiquer les limites de roulage de la portion de route à venir. D'ailleurs, la plupart des véhicules en circulation ne disposent d'aucune assistance du type ESP (pour Electronic Stability Program).

Les systèmes de contrôle du comportement du véhicule ne sont pas en mesure d'anticiper les dangers permanents situés dans le futur immédiat de la route.

Certains véhicules sophistiqués équipés d'un ensemble de capteurs disposés sur le volant, la direction, les freins, les amortisseurs, le patinage des roues ou encore le différentiel, sont en mesure de donner des informations relatives aux limites du comportement dynamique d'un véhicule. Ces informations sont ensuite reprises dans les centrales de freinage et les dispositifs d'assistance du type ABS (pour Anti-Blocage Système) et ESP. Ces systèmes sont asservis aux seules informations qui proviennent des capteurs, ce qui n'assure une assistance que du type réactif.

Quelque soit la sophistication de tels systèmes, ils sont aveugles et sont incapables d'anticiper un virage ou de situer le véhicule par rapport à la réalité de la route. Dans certaines conditions, par exemple un freinage d'urgence dans une route de montagne, dû à une erreur d'appréciation de la route, ou dans des conditions extrêmes comme le verglas, ils peuvent s'avérer contre-productifs.

On connaît par ailleurs des systèmes de cartographie routière utilisés par les gestionnaires des routes ou embarqués dans des systèmes de navigation. Ces systèmes ne mentionnent nullement les limites de roulage sur chaque portion de route pour telle ou telle famille de véhicules. Ils ne sont pas assez précis pour servir de référence au système d'assistance à la conduite. Ainsi, on a constaté des écarts de mesure allant parfois jusqu'à une centaine de mètres.

On connaît également des systèmes de navigation utilisant un positionnement GPS (pour Global Positioning System) pour donner une référence au parcours des véhicules. De par leur conception, ces systèmes de positionnement qu'ils soient du type GPS ou encore Galiléo, sont confrontés à une limite physique qui rend leur précision inconstante et non absolue. Les systèmes de navigation utilisent des méthodes communément appelées MAP MATCHING basées sur l'usage de gyroscopes, d'accéléromètres, qui permettent de compenser les erreurs de cartographie et les imprécisions des systèmes GPS pour la navigation. Cependant, le MAP MATCHING des navigations n'est pas en mesure de gérer la trajectoire d'un véhicule même de façon relative.

On connaît du document EP-A1-0763712 un dispositif tentant d'améliorer la précision des systèmes de navigation. Ce dispositif ne se base que sur des informations de type cinématique et est inapte à déterminer des valeurs limites de roulage.

On connaît également du document EP-A1-0561170 un système de référentiel pour comparer l'information en cours et améliorer le positionnement par rapport à une voie ferrée. Cette technique liée aux chemins de fer est difficilement transposable à une circulation sur voie routière.

Le document US-A1-6098007 assure le contrôle de l'accélération dynamique du véhicule mais sans aucune anticipation et sans prendre en compte la trajectoire du véhicule dans les paramètres de contrôle.

Il existe donc un besoin de proposer un dispositif et un procédé améliorés permettant une mise en corrélation de paramètres de bandes de roulement et de véhicules, et des valeurs de limite de roulage de sorte à pouvoir déterminer, avantageusement pour tout type de véhicule et de route, des relations utilisables notamment pour une assistance à la conduite ou l'amélioration de la conception, de la protection et de la prévention des routes.

Suivant l'art antérieur, dans le cas des systèmes du type ESP ou ABS, il existe un préjugé constant consistant à penser que l'assistance à la conduite doit être opérée essentiellement de façon réactive c'est-à-dire après mesure en temps réel par une pluralité de capteurs embarqués. L'invention surmonte ce préjugé en préconisant un système pouvant certes allier une prise de mesures en temps réel mais assurant aussi une anticipation dans le comportement du véhicule notamment en prenant en compte la trajectoire dudit véhicule et l'ensemble des paramètres liés à la bande de roulement dont sa géométrie en trois dimensions ainsi que ses caractéristiques tels le type de revêtement routier ou encore la quantité d'eau en surface.

Document US 5 752 240 divulgue un tel système.

Suivant une application, la présente invention est destinée à la collecte des informations de la géométrie des routes et à l'utilisation des informations de manière embarquée.

D'autres buts et avantages apparaîtront au cours de la description détaillée qui va suivre qui n'a cependant pas pour but de limiter l'invention.

Auparavant il est rappelé que la présente invention concerne un procédé de détermination de limites de roulage d'un véhicule en mouvement sur la bande de roulement d'une voie de circulation routière, caractérisé par le fait qu'il comprend les étapes consistant à
- obtenir des données géométriques définissant la bande de roulement,
- obtenir des données de caractérisation de la bande de roulement,
- obtenir des données de définition de la trajectoire du véhicule,
- obtenir des données de caractérisation du véhicule,
- déterminer par des moyens de calcul en temps réel des valeurs de limite de roulage du véhicule.

Suivant des modes de réalisation préférés mais non limitatifs, ce procédé est tel que
- les limites de roulage sont choisies parmi la vitesse de renversement, l'accélération de renversement, la vitesse de dérapage et l'accélération de dérapage,
- la détermination des valeurs de limite de roulage s'effectue au moyen d'un réseau de neurones,
- il comporte une étape préalable d'apprentissage du réseau de neurones à partir de l'acquisition de : - données de caractérisation par familles représentatives de véhicules, - données géométriques et de caractérisation d'un échantillon représentatif de bandes de roulement,
- l'apprentissage du réseau de neurones comporte : - une étape de calage entre des données de caractérisation du véhicule, des données géométriques et de caractérisation simplifiées de la bande de roulement et les limites de roulage ; - une étape de calage entre des données de caractérisation du véhicule, des données de trajectoire admissible du véhicule par rapport à la bande de roulement et les limites de roulage ; - une étape de calage entre des données de caractérisation du véhicule, des données caractéristiques du véhicule en mouvement à savoir : vitesse du centre de gravité par rapport à X et à Y, vitesse de lacte, accélération du centre de gravité par rapport à X et à Y, angle de dérive, braquage volant, vitesse de braquage volant et les limites de roulage,
- on définit, sur la bande de roulement, des points particuliers et on en définit la position,
- on définit les relations complexes entre toutes les variables caractérisant la bande de roulement, les trajectoires dynamiques admissibles et les points particuliers,
- on mesure le mouvement du véhicule, on déduit l'existence de points particuliers, et on détermine la trajectoire relative dudit véhicule,
- on rapproche les données mesurées de la position de points particuliers au passage du véhicule auxdits points particuliers, de sorte à augmenter la précision de localisation du véhicule,
- les points particuliers sont définis par des critères de courbure ou d'angle ou de changement d'altitude remarquables,
- on obtient les données géométriques définissant la bande de roulement, les données de caractérisation de la bande de roulement, les données de définition de la trajectoire du véhicule, les données de caractérisation du véhicule et les variables de limites de roulage par :
- simulation, - ou, mesures réelles, - ou, le constructeur du véhicule, - ou, un organisme indépendant communicant des valeurs de qualification, - ou, par transmission d'informations issues de fournisseurs de données cartographiques, - ou, par traitement d'images vidéo ou d'observations satellites en temps réel ou en différé,
- on compare les valeurs limites de roulage avec les valeurs instantanées de roulage du véhicule ;
- on génère un avertissement pour le conducteur lorsqu'une valeur instantanée est supérieure à la valeur limite correspondante
- on génère au moins un indicateur, accessible par le conducteur du véhicule, pour l'informer : - d'un danger de trajectoire, - ou d'une amélioration de position, - ou de l'existence d'un relief ou d'une pente,
- on génère en temps réel à destination du conducteur au moins un indicateur d'incidence sur la sécurité de la vitesse instantanée de son véhicule à l'endroit donné et pour l'aval de la bande de roulement, en regard d'au moins un paramètre suivant : limite de roulage, sa trajectoire, la vitesse légale, données de caractérisation de la bande de roulement et conditions météorologiques.
- les données de caractérisation d'un échantillon représentatif de la bande de roulement comportent au moins un des critères suivants :
- un paramètre d'adhérence ;
- une donnée indicative de danger ;
- une donnée indicative de l'obligation d'un passage à faible vitesse.
- les limites de roulage comportent au moins l'une des limites suivantes :
- limite de freinage, limite d'accélération, limite de cheminement ;
- instruction sur voie opposée, sortie de route, collision avec véhicule par l'avant, collision avec véhicule par l'arrière, collision avec ouvrage, collision avec obstacle sur route, collision avec piétons ;
- adhérence globale, caractéristique de roulage de la route en regard des équipements embarqués, caractéristiques de la route en regard du confort des passagers, caractéristiques de la route en regard de la fatigue du conducteur ;
- défauts et défaillance : conduite, conducteur, véhicule et équipements du véhicule, choix des modes de réglages, variables à corriger.
- les limites de roulage comportent des limites de trafic choisies parmi :
- un ralentissement du trafic, une remontée de queue de trafic, un écoulement de trafic.
- l'apprentissage du réseau de neurones comporte :
- une étape de calage entre des données géométriques, des données cartographiques, des intersections entre routes, des types de véhicules circulant sur ces routes, de la signalisation, des panneaux variables, des feux alternatifs, du nombre de types de véhicules circulant sur ces routes, de la vitesse des types de véhicules circulant sur ces routes, des conditions météorologiques simultanés, de l'éphéméride simultané, des événements hors et sur la chaussée simultanés, de l'accidentologie simultanée, et les limites de roulage.

L'invention concerne également un dispositif apte à mettre en oeuvre le procédé.

Suivant des possibilités avantageuses mais non limitatives, ce dispositif est tel qu'il comporte un réseau de neurones pour la détermination des valeurs limites de roulage, et qu'il comporte un circuit du type réseau de portes programmables in situ pour un traitement des données fortement parallèle.

Les dessins ci-joints sont donnés à titre d'exemples et ne sont pas limitatifs de l'invention. Ils représentent seulement un mode de réalisation de l'invention et permettront de la comprendre aisément.

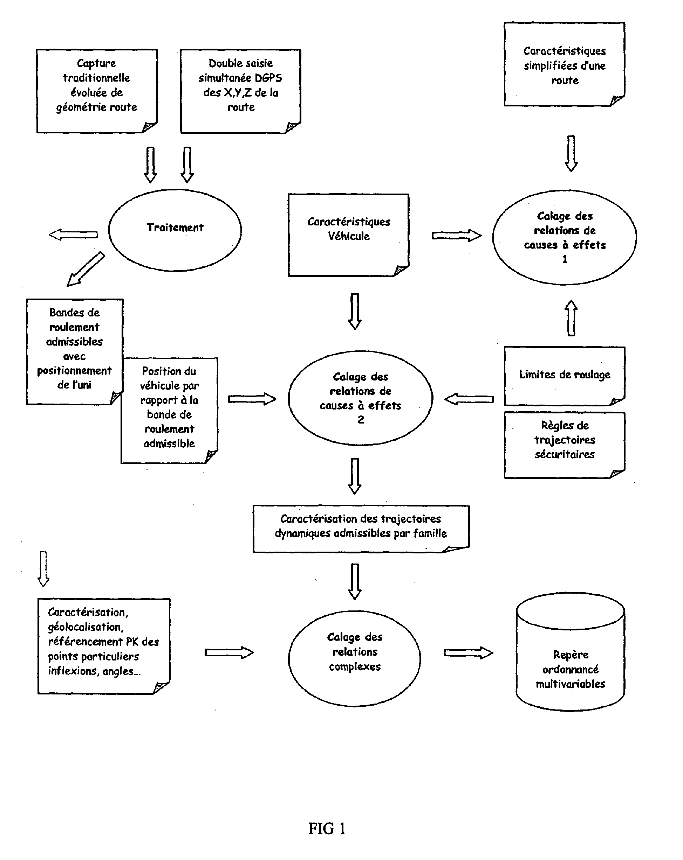

La figure 1 présente de façon synthétique les étapes du procédé de calage des relations de cause à effet et de calage des relations complexes dans le cadre de l'invention.

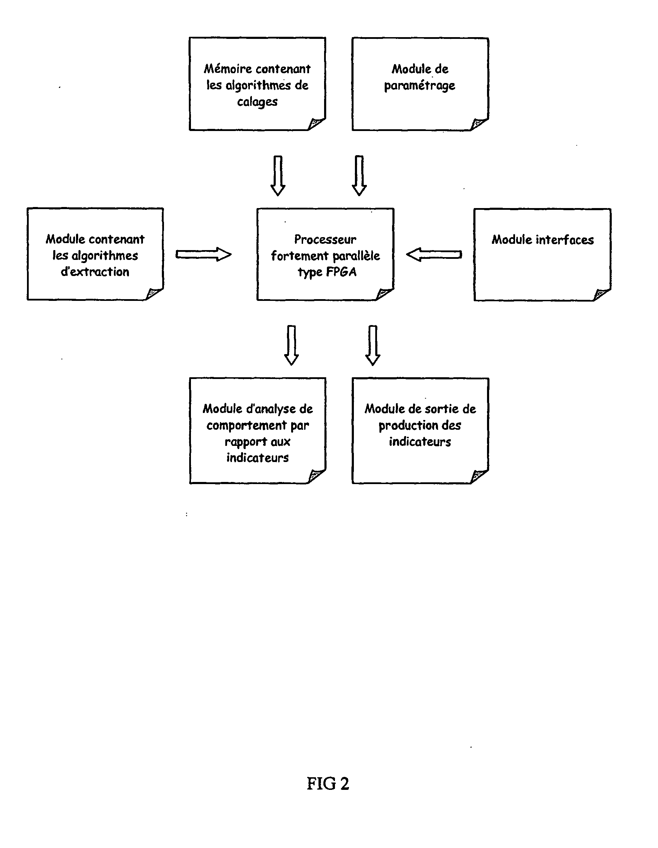

La figure 2 est un exemple d'organe constitutif d'un dispositif embarqué pour la mise en oeuvre de l'invention.

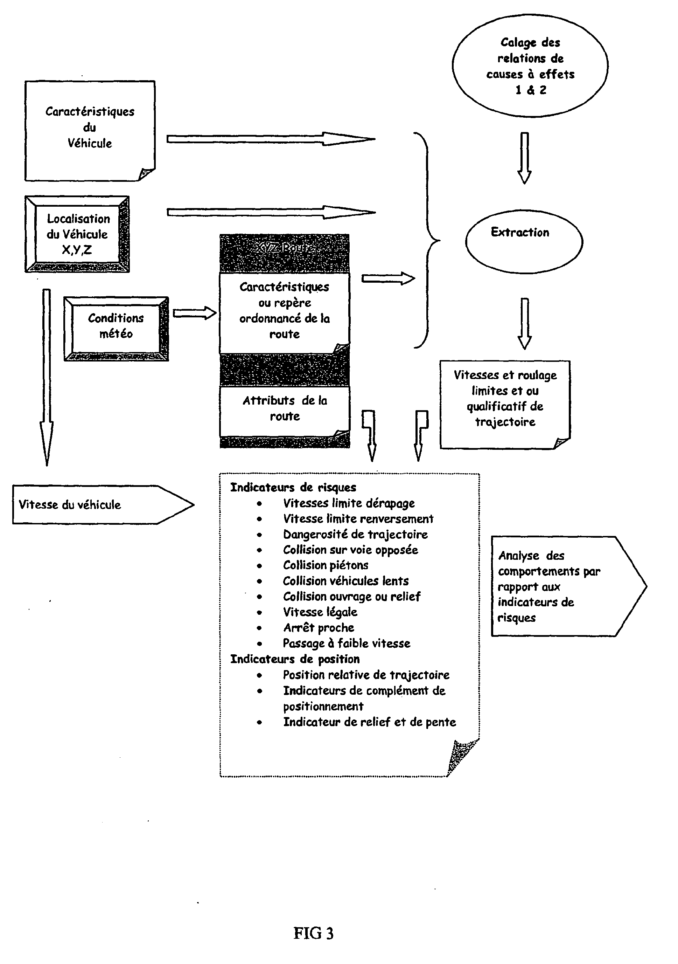

La figure 3 présente schématiquement une étape d'extraction d'indicateurs.
La figure 4 est un bloc diagramme montrant les étapes d'un premier calage.
La figure 5 est un bloc diagramme montrant les étapes d'un deuxième calage.

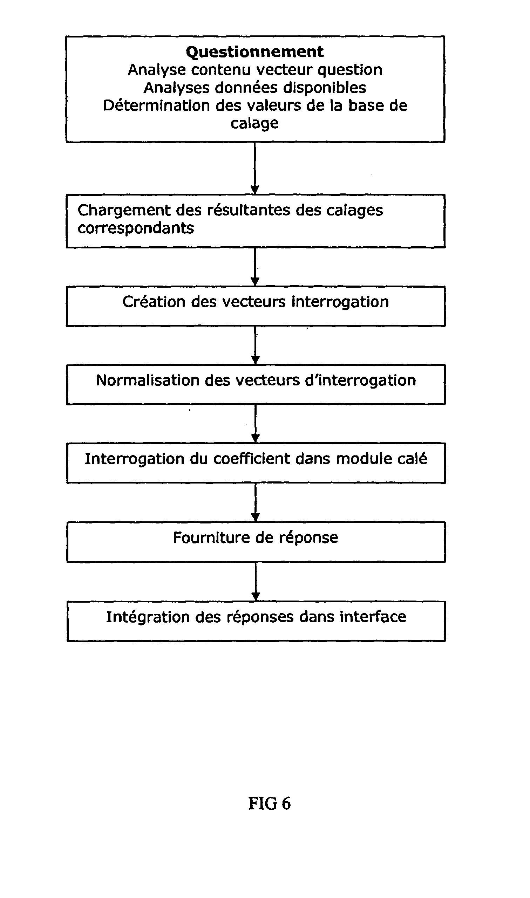

La figure 6 est un bloc diagramme indiquant les étapes d'extraction des indicateurs.

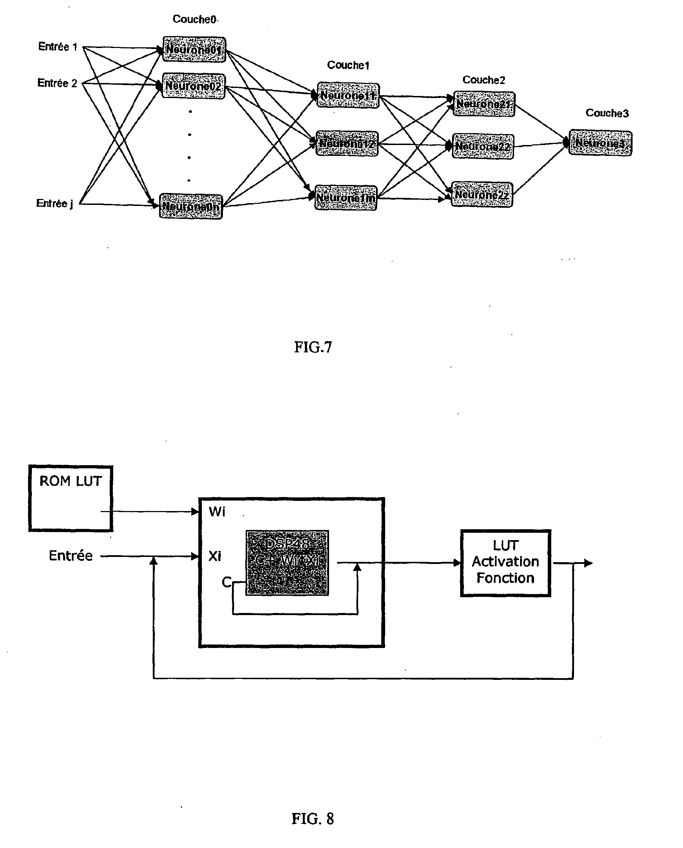

La figure 7 est un schéma illustrant la structure d'un réseau de neurones de configuration standard.
La figure 8 est un bloc diagramme d'implantation hardware d'un neurone dans un FPGA, avec les abréviations suivantes :
DSP : (digial signal processing), calcul de donnée de signal
LUT : (look-up table), table d'accès à un espace mémoire
ROM : (read only memory) , mémoire accessible en lecture,
RAM : (random access memory) mémoire à accès aléatoire
SUM : somme
FF1 : Flip Flop 1
Forme : Forme des fonctions d'activations

Pour chaque neurone, les coefficients synaptiques sont stockés dans les ROM des LUT, les fonctions addition multiplication sont réalisées par un DSP, le biais est considéré comme un coefficient multiplieur C, la fonction d'activation est stockée dans une ROM.

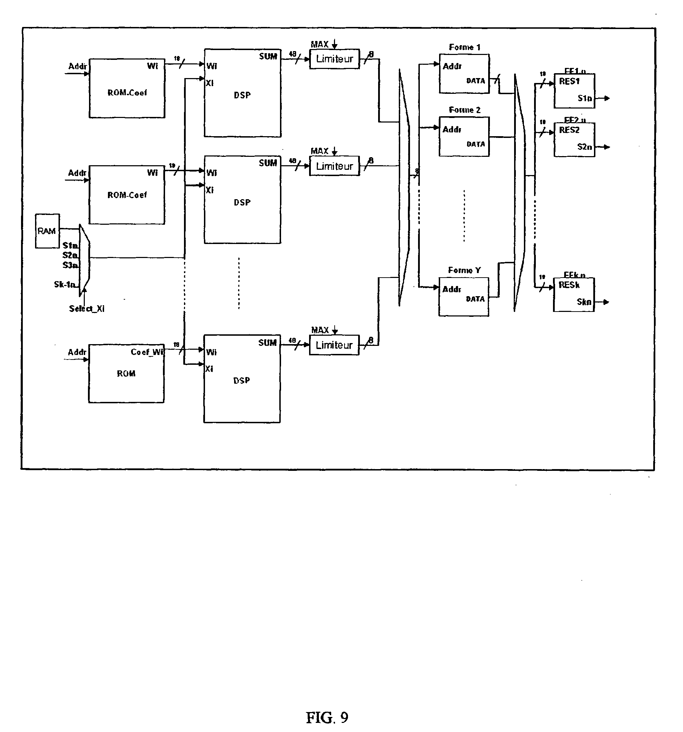

La figure 9 est un schéma technique de portage d'un réseau de neurones d'extraction d'indicateurs dans un FPGA.

Les DSP sont dédiés à un numéro de neurone de chaque couche, par exemple le DSP 1 est dédié à tous les premiers neurones de toutes les couches. Le contrôleur pilote cette affectation, les coefficients synaptiques propres à chaque neurone de chaque couche sont stockés dans les ROM des LUT et sont adressés à chaque neurone en fonction de l'ordre du contrôleur. Le DSP va multiplier chaque coefficient avec la variables d'entrées Xi correspondante et adressée par le contrôleur.

Chaque sortie de chaque neurone de chaque couche S1n, S2n, Skn ... pourra devenir une entrée de la couche d'après, cette réafectation est également pilotée par le contrôleur.

A cette figure, les abréviations sont les suivantes :
Wi : coefficient synaptique
Xi : valeur numérique de la variable

Une première étape de l'invention consiste à caler (calage 1) les liens de cause à effet existants entre les caractéristiques des véhicules mesurés et les caractéristiques de la route utilisées avec les limites de roulage obtenues.

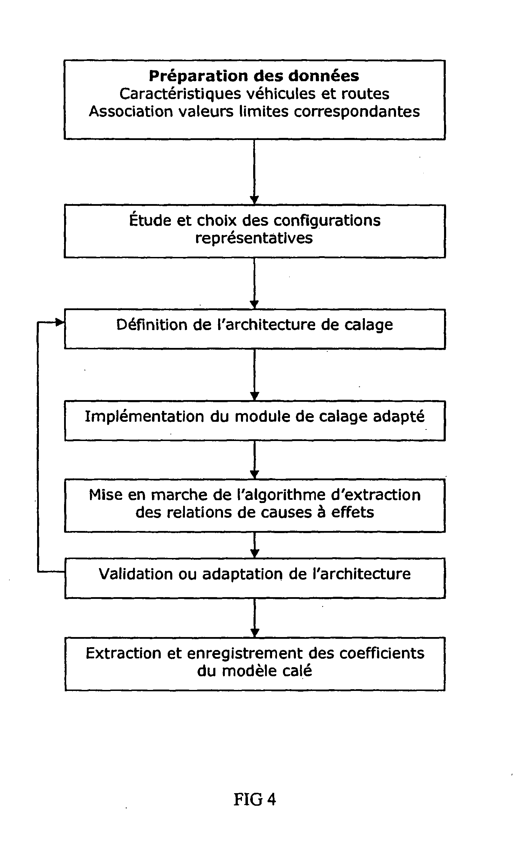

En référence à la figure 4, le calage est réalisé famille de véhicules par famille et progressivement, si on le désire, on fusionne les calages pour n'obtenir qu'un seul calage.

Certains calages peuvent être fusionnés comme par exemple les VL (véhicules légers) et les petits utilitaires d'une part, les PL (poids lourds) d'autre part et ensuite les PL semi remorques...

Au départ, il est possible que l'on réadapte l'architecture, une fois validée pour un ensemble de familles proches, l'architecture est stable.

Le calage peut être affiné au fur et à mesure que de nouvelles données de routes sont produites où que l'on caractérise les véhicules avec des variables plus fines.

Le calage 1 ne fait pas la différence de trajectoire de la voiture, on considère que la route et la trajectoire sont identiques.

De fait, on ne pourra pas donner d'informations relatives à la trajectoire.

Chaque véhicule est pris en compte par rapport à ses caractéristiques propres qui sont rapprochées de celles de la famille à laquelle il appartient ; l'état du véhicule et la charge du véhicule sont caractérisés selon des variables qui permettent d'établir une comparaison entre les véhicules. La route est également caractérisée selon un ensemble de variables. Les caractéristiques présentées ci-dessous permettent une caractérisation efficace entre deux véhicules différents, des sous-variables peuvent être utilisées pour spécifier des différences. De même, des caractéristiques plus fines peuvent être utilisées pour caractériser une route.

### Caractéristiques Véhicule

### Classification en familles

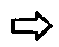 Type de traction : propulsion, traction, 4x4
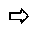 Poids / Puissance
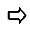 Dimensions
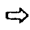 Masse
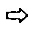 Empattement
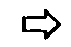 autre

### État du Véhicule

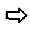 État des Pneus
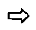 État des Amortisseurs
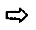 État de la Direction
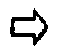 Pression de gonflage des pneus
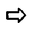 Dissymétrie de freinage
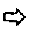 Réglages des trains avant et arrière
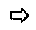 autres

### Charge du Véhicule

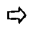 Charge mesurée

### Caractéristiques de la route

Chaussée : sèche, mouillée, verglas...
Type du revêtement : Classe, âge, altitude, exposition
Taux d'usure du revêtement
Uni
Courbure
Pente
Dévers
Autres

Il existe une infinité de combinaisons de caractéristiques voiture, route, conditions d'utilisation. Il est impossible de définir exhaustivement ces combinaisons. L'invention permet de déterminer à l'instant I ou de prédire en aval à l'instant I+n, les valeurs limites de roulage correspondantes à une combinaison et ce, même si cette combinaison n'a pas fait l'objet d'une qualification de relations de causes à effets.

La deuxième étape consiste à extrapoler les résultats de causes à effets obtenus pour quelques véhicules et pour un échantillon de routes, à tout type de véhicule et pour tout type de route. Pour être rigoureux, il convient que l'extrapolation soit réalisée par famille ou par ensemble de familles proches. On ne peut pas par exemple extrapoler les limites de passage d'une moto à partir des relations de causes à effets déterminées pour des camions.

Le procédé de calage de causes à effets et l'extrapolation peuvent être réalisés, par exemple, par une technique de réseaux de neurones.

L'invention est donc premièrement un procédé qui permet de déterminer en temps réel les limites de roulage d'un véhicule à l'endroit où il se trouve et de lui prédire les limites de roulage en aval de cette position.

Les limites de roulage peuvent être superposées aux contraintes inhérentes aux attributs de la route.

L'invention est également un dispositif qui fournit en temps réel des indicateurs en fonction des entrées disponibles dans le véhicule :
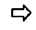 Vitesse limite dérapage
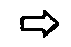 Vitesse limite renversement
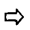 Collision sur voie opposée
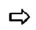 Collision piétons
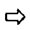 Collision véhicules lents
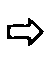 Collision ouvrage ou relief
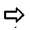 Vitesse légale
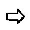 Arrêt proche
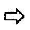 Passage à faible vitesse

La vitesse limite de roulage (glissade ou renversement) représente le paramètre clef qui synthétise nombre de valeurs dynamiques ; la diminution de cette vitesse limite indique soit que les conditions, la géométrie, ou les caractéristiques de la route se dégradent, soit que l'action du conducteur entraîne une trajectoire qui abaisse la vitesse limite.

A vitesse constante pour des caractéristiques de véhicule et de route identiques, tout changement de trajectoire entraîne un changement des limites de roulage.

Dans les conditions normales d'utilisation, l'incidence de la différence de trajectoire est faible ; dans des conditions extrêmes de vitesse excessive, de conditions dégradées, l'incidence du changement de trajectoire peut être majeure. De plus, dans le cas où un conducteur, pour des raisons accidentelles ou volontaires, ne respecte pas le code de la route et qu'il empiète sur la voie opposée en adoptant des trajectoires corde à corde de type compétition, la vitesse limite réelle instantanée se trouve augmentée et n'est plus alors un indicateur de sécurité.

L'invention associe aux limites de roulage une analyse de la trajectoire, afin d'encadrer la notion de vitesse par une notion de positionnement sur la route.

L'invention apporte une innovation par une technique DGPS (GPS différentiel) de double saisie simultanée des points X,Y et Z correspondant aux extrémités en largeur d'une voie. Cette technique délimite la mesure de la voie et donne un référentiel horizontal. Cette technique innovante de saisie est réalisée et est superposée concomitamment aux captures d'informations réalisées par les véhicules de métrologie du marché qui opère des mesures d'auscultation et détermine l'uni de la voie. L'uni retranscrit, entre autre, les tassements de la voie au niveau du passage des roues.

La double capture DGPS est effectuée en léger décalage de temps pour chaque côté de la route, les valeurs obtenues sont complétées, lors du traitement par calculs, avec les informations gyroscopiques, accéléromètres et compensateurs de mouvement du véhicule de capture.

L'invention permet la détermination d'une bande de roulement admissible par traitement de variables incluant des variables comme l'uni. Ce même traitement permet la caractérisation, la géolocalisation et le référencement aux points kilométriques des collectivités, des points particuliers tels que l'inflexion des courbes, les angles...

Le procédé permet également le calage (calage 2) des relations de causes à effets entre la position du véhicule par rapport à la bande de roulement + les caractéristiques de la voiture et les limites de roulage. Le calage est établi à partir d'un nombre de routes qui représente une variété de géométries et à partir de véhicules dont les caractéristiques sont connues, il est ensuite extrapolé à tout type de route et à tout type de véhicule.

Ce calage encadré par les règles de trajectoires sécuritaires permet de caractériser les trajectoires dynamiques admissibles.

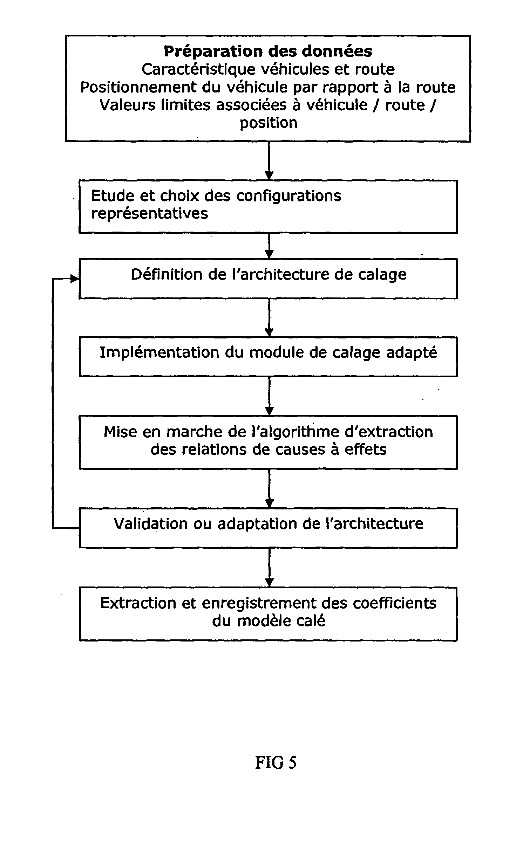

La figure 5 donne une illustration de cette étape dans laquelle le calage est effectué entre le véhicule, la route, la trajectoire du véhicule sur ladite route et les valeurs limites de roulages correspondants.

Le procédé permet, selon un ordonnancement précis, le calage (calage 3) des relations complexes entre les points particuliers et entre toutes les variables caractérisant les trajectoires dynamiques admissibles. La base de données constitue un repère ordonnancé multivariable.

Un calage similaire peut être mis en oeuvre pour intégrer des éléments caractérisant le trafic et ainsi étendre les limites déterminées à des limites de trafic.

L'invention est également un dispositif qui fournit en temps réel des indicateurs en fonction des entrées disponibles dans le véhicule :
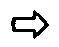 La position relative de trajectoire
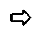 Un complément de positionnements
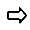 Des indications de relief et de pente
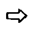 Une correction GPS différentielle
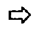 Dangerosité de trajectoire

Le procédé est mis en oeuvre dans un véhicule à l'aide d'un dispositif embarqué. Ledit dispositif comporte une mémoire où sont stockés les algorithmes de calages, un module d'extraction, un processeur massivement parallèle comme un FPGA (qui est un processus à portes programmables in situ), un module de paramétrage des caractéristiques, un module de sortie des indicateurs, un module d'analyse des comportements par rapport aux indicateurs, un module par exemple avec les 18 interfaces entrées-sorties suivantes :
1. Gyroscope
2. Accéléromètre deux ou trois axes
3. Variomètre
4. GPS-GALILEO
5. Compteur de vitesse du véhicule
6. Compteur de distance
7. Contrôle technique
8. Contrôle parallélisme
9. Mesure de pression pneus
10. Navigation
11. Données météo
12. Bus internes véhicule 1
13. Bus internes véhicule 2
14. Mémoire additive contenant la base de données repère ordonnancé et les attributs
15. Port de communication local 1
16. Port de communication local 2
17. Port de communication local 3
18. Port de communication externe 1
19. Port de communication externe 2
20. Port de communication externe 3

Un navigateur mobile de type PDA (pour Personal Digital Assistant) / PND (pour Personal Navigation Device) pourra être connecté aux ports 4 et 10 via les ports 15, 16 ou 17.

Le dispositif peut être inclus dans un PDA, un PND ou une navigation, il peut être incorporé dans un boîtier dédié, il peut être inclus dans un FPGA existant dans un véhicule.

Le couplage à une navigation permet d'implémenter des dispositifs de stockage et d'accès à la mémoire plus simples, car le dispositif objet de l'invention peut se focaliser sur la zone mémoire pertinente en regard de la zone géographique d'évolution du véhicule.

Contrairement à toutes les autres techniques ou aux autres procédés de navigation, le dispositif est capable d'interpréter des données relatives en les rapprochant de façon submétrique avec la réalité de la bande de roulage et les variations de trajectoires possibles.

Le dispositif capte en temps réel toutes les données transmises sur ses entrées, le processeur de type FPGA active les algorithmes d'extraction et de calage afin de rapprocher les données de ces entrées au repère ordonnancé. Le dispositif utilise toutes les données pertinentes pour caractériser la trajectoire. Le dispositif repositionne le véhicule de façon relative et continue par rapport à la bande de roulement et détermine sa trajectoire relative.

L'utilisation d'un FPGA permet dans des délais de temps inférieurs à la milliseconde de fournir et de traiter plusieurs cycles d'informations ; la précision des informations captées et la capacité du dispositif de situer les données temps réel provenant des éléments de mesure, confèrent une précision d'information qui dépasse largement tous les systèmes grand public existants de positionnement et de navigation.

Un des avantages majeurs de l'invention est que la trajectoire et la vitesse du véhicule sont les deux seuls paramètres nécessaires pour guider de façon dynamique le conducteur. Un des avantages réside dans le fait que cette invention peut facilement être utilisable dans n'importe quel type de véhicule non instrumentalisé préalablement.

L'invention apporte une innovation profonde par rapport aux systèmes habituellement utilisés par les équipementiers, les constructeurs automobiles et les fournisseurs de systèmes et de cartographie de navigation.

L'invention permet, à n'importe quel véhicule sur n'importe quelle route, de savoir, avec un minimum de métrologie embarquée, en fonction de la seule position du véhicule, les limites que le conducteur ne doit pas dépasser à l'endroit où il se trouve et pour les portions suivantes de la route.

L'invention offre une amélioration du positionnement des systèmes de géolocalisation et des systèmes de navigation et un référentiel de relief et de pente qui permettra des avancées en matière de surveillance et d'optimisation de la consommation de carburant et des capacités de freinage.

Un des avantages du procédé est d'être facilement mis en oeuvre par l'intermédiaire d'un système installé sur des véhicules, et ce, même si ces véhicules ne disposent pas de capteurs tels que angle de volant, mesure de l'adhérence et même s'ils ne sont pas pourvus de système d'assistance à la conduite de type ESP, ABS ...

Chaque véhicule n'est pas à même de fournir au système embarqué des données de même nature ou de même précision. Certains véhicules disposent de PDA ou de PND ou de navigation, d'autres véhicules sont dotés d'équipements comme l'ESP pouvant fournir certaines variables qui permettront de renforcer la précision de la détermination de la trajectoire.

Le procédé permet également de caler des relations causes à effets entre les caractéristiques de la voiture et de la route + des informations en provenance des véhicules équipés (vitesse du centre de gravité par rapport à X et Y, vitesse de lacet, accélération du centre de gravité par rapport à X et à Y, angle de dérive, braquage volant, vitesse de braquage volant) et les limites de roulage.

Cet aspect du procédé permet d'obtenir des indicateurs plus fins que le calage 1, cette technique est fortement innovante mais requiert des résultats de mesure qui ne sont pas disponibles dans tous les véhicules.

Chaque département ou région ne fournit pas forcément des informations temps réel sur les conditions de chaque route. Les données d'adhérence caractérisant les routes ne sont pas toujours disponibles.

Les informations nécessaires à la caractérisation de l'état du véhicule et aux conditions de la route sont largement disponibles :
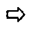 Le contrôle technique peut donner les informations d'état des amortisseurs, de dissymétrie de freinage, d'état de la direction
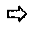 Le contrôle de parallélisme peut donner l'état des trains
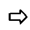 La mesure de pression peut être obtenue par des capteurs de pression temps réel dont l'usage sera démocratisé dans les années futures
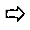 Les bus internes peuvent fournir la vitesse du véhicule
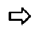 Les stations météo locales des collectivités gestionnaires des routes donnent des informations précises sur les microclimats qui viennent renforcer les informations simples issues par exemple des essuie-glaces et des instruments embarqués de mesure de la température extérieure. Le conducteur peut commuter un indicateur de conditions pluie manuellement (faible pluie, forte pluie, déluge).

En fonction de la disponibilité et de la qualité des informations en temps réel dans le véhicule, le système qualifie la confiance des informations et adapte son niveau d'information à destination du conducteur.

Le dispositif embarqué est paramétré par l'utilisateur, qui indique la marque, le type du véhicule, les visites techniques, le kilométrage et donne une appréciation de la périodicité et de la qualité de l'entretien. Le centre de contrôle technique et le centre de contrôle du parallélisme peuvent entrer leurs informations. Le dispositif embarqué pourra être relié au bus interne de la voiture ou plus simplement aux contacts de l'essuie-glace et au câble ISO de vitesse. Le dispositif pourra afficher des indicateurs qui traduisent les informations dont il dispose. Une version plus évoluée du dispositif permet de palier la carence des informations produites par certains conducteurs et de qualifier la constante dans les déviations de la trajectoire imputables à la dégradation du véhicule.

Le dispositif embarqué fait la synthèse des informations disponibles.

Une des fonctions du procédé est d'avertir en temps réel le conducteur des limites de vitesse de roulage tolérées par sa trajectoire à l'endroit où il se trouve et dans les portions de routes suivantes.

Les vitesses limites de roulage seront superposées aux vitesses limites légales et aux exigences de décélération et de limite d'accélération induites et aux contraintes inhérentes aux attributs de la route.

La réaction du conducteur pourra être analysée en regard des informations transmises et en regard des caractéristiques de la route, de la voiture et des conditions de route.

Une autre fonction concomitante du procédé est de comparer la trajectoire relative du véhicule, à la trajectoire sécuritaire, et d'extraire les risques de cette trajectoire relative. Le système avertira le conducteur de la dangerosité de sa trajectoire. A partir d'un certain niveau de danger de trajectoire, le procédé n'informera pas le conducteur de la vitesse limite tolérée, mais focalisera son alerte sur la nécessité de corriger sa trajectoire, les dangers de trajectoires étant principalement matérialisés par le risque de collision sur voie opposée et/ou par des sorties de routes.

Une autre fonction du procédé est de fournir au conducteur des indicateurs de risques immédiats et à venir qui affichent la variation du niveau de risque de façon corrélative aux propres actions du conducteur. Par exemple, un sur-braquage ou un sous-braquage inadéquats auront pour effet de changer la forme de la trajectoire et de diminuer sensiblement les valeurs limites de roulage tolérées. Si le conducteur roule de façon éloignée de la limite et que sa trajectoire est correcte, l'indicateur de vitesse limite ne sollicitera pas son attention. Si le conducteur roule de façon proche de la vitesse limite, cette action inadéquate aura pour conséquence de diminuer la limite et donc de la rapprocher de la vitesse réelle de la voiture, l'indicateur, qui aura déjà alerté le conducteur de la proximité du danger et de la zone limite, renforcera son alerte.

Une autre fonction du procédé est de donner des informations de référence aux systèmes d'aide à la conduite ESP, ABS ..., telles que les vitesses de limites de roulage et la référence de la trajectoire par rapport à l'axe de la route.

Une autre des fonctions du procédé est d'améliorer la précision du positionnement fourni par les systèmes existants (navigations et GPS) et notamment de donner une référence au Z.

Une autre fonction du procédé est de qualifier l'adéquation des moyens de prévention et de protection mis en oeuvre par les gestionnaires des routes. Les vitesses limites sont-elles adaptées dans les zones dangereuses et/ou sensibles, pour les familles de véhicules et pour les diverses conditions météorologiques. Les moyens de protections sont-ils adaptés aux endroits propices aux sorties de route, aux rails de sécurité, aux bandes latérales de dégagements, etc...

Une autre fonction du procédé permet l'établissement de cartes précises au 1/1000^{ème} sur lesquelles peuvent être portées les différentes limites de trajectoire et les risques de sortie de route ou de passages sur les voies opposées, par famille de véhicules, ainsi que les dangers et les moyens de protection et de prévention mis en oeuvre par les collectivités. Cette cartographie, qui peut être numérique, peut montrer les dangers et les risques de manière dynamique ainsi que les modifications engendrées par les changements de conditions atmosphériques.

Le procédé peut être mis en oeuvre avec les bases de données existantes. En effet, les sociétés qui collectent les données routières afin d'établir les cartographies employées dans les navigations, les principales étant NAVTEQ et TELEATLAS (marques déposées), connaissent le niveau de confiance de leurs données cartographiques. Les moyens de calage (calage 1) distribués dans un véhicule permettent par extraction de fournir les limites de roulage, en fonction de la cartographie comportant le niveau de confiance de la route parcourue et en fonction des caractéristiques d'un véhicule. Par exemple, si le niveau de confiance est particulièrement faible, car la géométrie de la route est connue comme imprécise, le dispositif donnera des informations relatives à une zone large et ce, de façon anticipative. Si au contraire, le niveau de confiance est fort alors le système donnera des informations plus précises en temps réel en regard d'un virage particulier.

La saisie de sélection du véhicule et de son état peut être réalisée par l'intermédiaire des interfaces usuels des PDA, PND et systèmes de navigation. Les véhicules et leur état d'entretien sont classés en familles, dans lesquelles le dispositif analyse les informations floues entrées par l'utilisateur et retient les limites des cas les plus défavorables.

A partir de la base des données routières, le dispositif extrait des limites de roulage qu'il qualifie de façon simple par rapport au type de véhicule générique, sous forme d'indicateurs avec une marge de sécurité.

Le conducteur sélectionne son véhicule et son état d'entretien, et spécifie les conditions climatiques ; à chaque section de route, le dispositif calcule la limite future et la compare avec la vitesse instantanée ou la décélération, et alerte le conducteur si les valeurs sont dangereuses pour le virage immédiat et pour le virage suivant.

Une des techniques pour réaliser l'extraction des trajectoires et des limites peut être l'interrogation de la connaissance par le biais de réseaux de neurones.

Une des techniques pour réaliser les extractions, pour déterminer la confiance et pour ajuster les réponses dans le cadre de flux de variables hétérogènes est l'utilisation des FPGA.

### Variables définissant la trajectoire du véhicule

Position du capteur de trajectoire par rapport à X
Position du capteur de trajectoire par rapport à Y
Position du capteur de trajectoire par rapport à z

### Variables limites en chaque point XYZ sur la trajectoire

Vitesse maximale estimée adhérence
Vitesse maximale estimée renversement
Accélérations correspondantes dérivées des vitesses

### Attributs de la route

Nombre de voies
Largeur des voies
sens des voies
Voies convergentes
Giratoires
Croisements
Accotements
Signalisation et visibilité des panneaux
Visibilité de la route
Priorités
Zones à protéger (écoles, hôpitaux, passages cloutés...)
Dangers (ravins, rétrécissements en largeur et en hauteur, ...)
Exposition (versant nord, réceptacle de pluie, ...)
Vitesse à partir d'un panneau de consigne
Vitesse à partir d'un panneau d'entrée ou de sortie d'agglomération
Vitesse de décélération pour atteindre la consigne
Vitesse d'accélération autorisée à partir de la fin de consigne

## Revendications

1. Procédé de détermination de limites de roulage d'un véhicule en mouvement sur la bande de roulement d'une voie de circulation routière, **caractérisé par le fait qu'**il comprend les étapes consistant à
- obtenir des données géométriques définissant la bande de roulement,
- obtenir des données de caractérisation de la bande de roulement,
- obtenir des données de définition de la trajectoire du véhicule,
- obtenir des données de caractérisation du véhicule,
- déterminer par des moyens de calcul en temps réel des valeurs de limite de roulage du véhicule,
et **par le fait que** la détermination des valeurs de limite de roulage s'effectue au moyen d'un réseau de neurones et qu'il comporte une étape préalable d'apprentissage du réseau de neurones à partir de l'acquisition de :
- données de caractérisation par familles représentatives de véhicules,
- données géométriques et de caractérisation d'un échantillon représentatif de bandes de roulement.

2. Procédé selon la revendication 1 dans lequel les limites de roulage sont choisies parmi la vitesse de renversement, l'accélération de renversement, la vitesse de dérapage et l'accélération de dérapage.

3. Procédé selon la revendication 1 ou 2 dans lequel l'apprentissage du réseau de neurones comporte :
- une étape de calage entre des données de caractérisation du véhicule, des données géométriques et de caractérisation simplifiées de la bande de roulement et les limites de roulage.

4. Procédé selon la revendication 1 ou 2 dans lequel l'apprentissage du réseau de neurones comporte :
- une étape de calage entre des données de caractérisation du véhicule, des données de trajectoire admissible du véhicule par rapport à la bande de roulement et les limites de roulage.

5. Procédé selon l'une des revendications 1 à 4 dans lequel l'apprentissage du réseau de neurones comporte :
- une étape de calage entre des données de caractérisation du véhicule, des données caractéristiques du véhicule en mouvement à savoir : vitesse du centre de gravité par rapport à X et Y, vitesse de lacet, accélération du centre de gravité par rapport à X et à Y, angle de dérive, braquage volant, vitesse de braquage volant et les limites de roulage.

6. Procédé selon une quelconque des revendications 1 à 5 dans lequel
- on définit, sur la bande de roulement, des points particuliers et on en définit la position,
- on définit les relations complexes entre toutes les variables caractérisant la bande de roulement, les trajectoires dynamiques admissibles et les points particuliers,
- on mesure le mouvement du véhicule, on déduit l'existence de points particuliers, et on détermine la trajectoire relative du dit véhicule,
- on rapproche les données mesurées de la position de points particuliers au passage du véhicule auxdits points particuliers, de sorte à augmenter la précision de localisation du véhicule.

7. Procédé selon la revendication 6 dans lequel les points particuliers sont définis par des critères de courbure ou d'angle ou de changement d'altitude remarquables.

8. Procédé selon les revendications 1 à 7, dans lequel on obtient les données géométriques définissant la bande de roulement, les données de caractérisation de la bande de roulement, les données de définition de la trajectoire du véhicule, les données de caractérisation du véhicule et les variables de limites de roulage par :
- simulation,
- ou, mesures réelles,
- ou, le constructeur du véhicule,
- ou, un organisme indépendant communicant des valeurs de qualification,
- ou, par transmission d'informations issues de fournisseurs de données cartographiques,
- ou, par traitement d'images vidéo ou d'observations satellites en temps réel ou en différé.

9. Procédé selon une quelconque des revendications 1 à 8 dans lequel :
- on compare les valeurs limites de roulage avec les valeurs instantanées de roulage du véhicule ;
- on génère un avertissement pour le conducteur lorsqu'une valeur instantanée est supérieure à la valeur limite correspondante.

10. Procédé selon une quelconque des revendications 1 à 9 dans lequel on génère au moins un indicateur, accessible par le conducteur du véhicule, pour l'informer :
- d'un danger de trajectoire,
- ou d'une amélioration de position,
- ou de l'existence d'un relief ou d'une pente.

11. Procédé selon une quelconque des revendications 1 à 10, dans lequel on génère en temps réel à destination du conducteur au moins un indicateur d'incidence sur la sécurité de la vitesse instantanée de son véhicule à l'endroit donné et pour l'aval de la bande de roulement, en regard d'au moins un paramètre suivant : limite de roulage, sa trajectoire, la vitesse légale, données de caractérisation de la bande de roulement et conditions météorologiques.

12. Procédé selon une quelconque des revendications 1 à 11 dans lequel les données de caractérisation d'un échantillon représentatif de la bande de roulement comportent au moins un des critères suivants :
- un paramètre d'adhérence ;
- une donnée indicative de danger ;
- une donnée indicative de l'obligation d'un passage à faible vitesse.

13. Procédé selon la revendication 12 dans lequel les limites de roulage comportent au moins l'une des limites suivantes :
- limite de freinage, limite d'accélération, limite de cheminement ;
- instruction sur voie opposée, sortie de route, collision avec véhicule par l'avant, collision avec véhicule par l'arrière, collision avec ouvrage, collision avec obstacle sur route, collision avec piétons ;
- adhérence globale, caractéristique de roulage de la route en regard des équipements embarqués, caractéristiques de la route en regard du confort des passagers, caractéristiques de la route en regard de la fatigue du conducteur ;
- défauts et défaillance : conduite, conducteur, véhicule et équipements du véhicule, choix des modes de réglages, variables à corriger.

14. Procédé selon la revendication 2 dans lequel les limites de roulage comportent des limites de trafic choisies parmi :
- un ralentissement du trafic, une remontée de queue de trafic, un écoulement de trafic.

15. Procédé selon la revendication 14 dans lequel l'apprentissage du réseau de neurones comporte :
- une étape de calage entre des données géométriques, des données cartographiques, des intersections entre routes, des types de véhicules circulant sur ces routes, de la signalisation, des panneaux variables, des feux alternatifs, du nombre de types de véhicules circulant sur ces routes, de la vitesse des types de véhicules circulant sur ces routes, des conditions météorologiques simultanés, de l'éphéméride simultané, des événements hors et sur la chaussée simultanés, de l'accidentologie simultanée, et les limites de roulage.

16. Dispositif de détermination de limites de roulage d'un véhicule en mouvement sur la bande de roulement d'une voie de circulation routière apte à mettre en oeuvre le procédé selon une quelconque des revendications 1 à 15.

17. Dispositif selon la revendication 16 comportant un circuit du type réseau de portes programmables in situ pour un traitement des données fortement parallèle.

## Claims

1. A method for determining the rolling limits of a vehicle moving on the traffic lane of a roadway, **characterised by** the fact that it includes the steps consisting in:
- obtaining geometric data defining the traffic lane,
- obtaining data characterising the traffic lane,
- obtaining data defining the vehicle path,
- obtaining data characterising the vehicle,
- determining, in real time, the values for the rolling limits of the vehicle by calculation means,
and by the fact that the determination of the values of the rolling limit is performed using a neural network and that it includes previous step of the neural network learning from the acquisition of:
- characterising data by families representative of vehicles,
- geometric and characterising data for one sample representing traffic lanes.

2. A method according to claim 1, wherein the rolling limits are selected among the rollover speed, the rollover acceleration, the slide-slip speed and the slide-slip acceleration.

3. A method according to claim 1 or 2, wherein the learning by the neural network includes:
- a step for setting between vehicles characterising data, geometric and characterising simplified data of the traffic lane and the rolling limits.

4. A method according to claim 1 or 2, wherein the learning by the neural network includes:
- a step of setting between the vehicle characterising data, permissible path data for the vehicle with respect to the traffic lane and the rolling limits.

5. A method according to one of claims 1 to 4, wherein the learning by the neural network includes:
- a step of setting between characterising data of the vehicle, data characterising the vehicle in motion, i.e. the speed of the centre of gravity with respect to X and Y, the rate of yaw, the acceleration of the centre of gravity with respect to X and Y, the drift angle, the steering of the wheel, the speed of the steering of the wheel and the rolling limits.

6. A method according to any one of claims 1 to 5, wherein
- particular points are defined on the traffic lane and the position thereof is defined,
- complex relations between all the variables characterising the traffic lane, the permissible dynamic path and the particular points are defined,
- the motion of the vehicle is measured, the existence of particular points is deduced and the relative path of said vehicle is determined,
- the measured data are compared to the position of the particular points upon the passage of the vehicle at said particular points so as to increase the accuracy of the vehicle location.

7. A method according to claim 6, wherein the particular points are defined by curvature or angle or altitude changes criteria which are remarkable.

8. A method according to claims 1 to 7, wherein the geometry data defining the traffic lane, the data characterising the traffic lane, the data defining the vehicle path, the data characterising the vehicle and the variables of the rolling limits are obtained by:
- simulation,
- or real measures,
- or the vehicle manufacturer,
- or an independent organisation communicating qualification values,
- or through the transmission of information delivered by map data suppliers,
- or by processing video images or real time or delayed time observation from satellites.

9. A method according to any one of claims 1 to 8, wherein:
- the rolling limit values are compared with the instantaneous values of the rolling of the vehicle;
- a warning is generated for the driver when an instantaneous value is greater than the matching limit value.

10. A method according to any one of claims 1 to 9, wherein at least one indicator accessible by the vehicle driver is generated to inform him/her:
- of a danger in the paths,
- or an improved position,
- or of the existence of the relief or slope.

11. A method according to anyone of claims 1 to 10, wherein at least one indicator about the incidence on safety of the instantaneous speed of the vehicle at the given spot and downstream the traffic lane is generated in real time to the driver, relative to at least one of the following parameters: rolling limit, his or her path, the regulatory speed, the data characterising the traffic lane and the weather conditions.

12. A method according to any one of claims 1 to 11, wherein the data characterising a sample representing the traffic lane include at least one of the following criteria:
- an adherence parameter;
- data indicating danger;
- data indicating of the obligation of a low velocity passage.

13. A method according to claim 12, wherein the rolling limits include at least one of the following limits:
- braking limit, acceleration limit, travelling limit;
- instruction on the opposite lane, ram-off roadway accident, frontal collision with a vehicle, rear collision with a vehicle, collision with an engineering structure, a collision with an obstacle on the road, collision with pedestrians;
- global adherence, rolling characteristic of the road relative to onboard equipment, road characteristics relative to the passengers' comfort, road characteristics relative to the driver's fatigue;
- defects and failures: driving, driver, vehicle and vehicle equipment, selection of the adjustment modes, variables to be corrected.

14. A method according to claim 2, wherein the rolling limits include traffic limits selected among:
- a traffic slowdown, the driving up the traffic line, a traffic flow.

15. A method according to claim 14, wherein the learning of the neural network includes:
- a step of setting between geometric data, map data, crossing road, the types of vehicles driving on the road, signalling, the variable signs, the alternate street lights, the number of types of vehicles driving on these roads, the speed of the vehicle types driving on these roads, simultaneous weather conditions, simultaneous ephemerides, simultaneous events on and off the road, simultaneous accidentology, and the rolling limits.

16. A device for determining the rolling limits of a vehicle moving on the traffic lane of the roadway able to implement the method according to any one of claims 1 to 15.

17. A device according to claim 16 including a circuit of the in situ programmable gate network for a strongly parallel processing of data.

## Patentansprüche

1. Verfahren zur Bestimmung der Rollgrenzen eines sich auf dem Fahrstreifen einer Straße für den Straßenverkehr bewegenden Fahrzeugs, **gekennzeichnet dadurch, dass** es folgende Schritte umfasst:
• Erfassung geometrischer Daten des Fahrstreifens,
• Erfassung charakteristischer Eigenschaften des Fahrstreifens,
• Erfassung von Daten, welche die Bahnkurve des Fahrzeugs festlegen,
• Erfassung der Daten zur Festlegung der Fahrzeugeigenschaften,
• die rechnerische, zeitgleiche Bestimmung der Rollgrenzwerte des Fahrzeugs, sowie **dadurch**, dass die Bestimmung der Rollgrenzwerte mit Hilfe eines neuronalen Netzes erfolgt und dass dieses neuronale Netz zuvor einen Lernprozess absolvieren muss, in dem folgende Daten erfasst werden:
• charakteristische Daten repräsentativer Fahrzeugfamilien,
• geometrische und charakteristische Daten einer statistisch repräsentativen Anzahl von Fahrstreifen.

2. Verfahren gemäß Anspruch 1, bei dem die Rollgrenze aus der Umkippgeschwindigkeit, der Umkippbeschleunigung, der Schleudergeschwindigkeit oder der Schleuderbeschleunigung bestimmt wird.

3. Verfahren gemäß Anspruch 1 oder 2, bei dem der Lernprozess des neuronalen Netzes
• einen Schritt zur Abstimmung der charakteristischen Eigenschaften des Fahrzeugs, der vereinfachten geometrischen und charakteristischen Daten des Fahrstreifens und der Rollgrenzen umfasst.

4. Verfahren gemäß Anspruch 1 oder 2, bei dem der Lernprozess des neuronalen Netzes
• einen Schritt zur Abstimmung der charakteristischen Eigenschaften des Fahrzeugs, der zulässigen Bahnkurve des Fahrzeugs in bezug auf den Fahrstreifen und der Rollgrenzen umfasst.

5. Verfahren gemäß Anspruch 1 bis 4, bei dem der Lernprozess des neuronalen Netzes
• einen Schritt zur Abstimmung der charakteristischen Fahrzeugeigenschaften mit den charakteristischen Daten des bewegten Fahrzeugs umfasst, d.h.: der Geschwindigkeit des Schwerpunkts in bezug auf X und Y, der Geschwindigkeit in seitlicher Richtung, der Beschleunigung des Schwerpunktes in bezug auf X und Y, des Schiebewinkels, des Einschlages des Lenkrades, der Winkelgeschwindigkeit des Lenkrades und der Rollgrenzen.

6. Verfahren gemäß einem der vorstehenden Ansprüche 1 bis 5, bei dem
• bestimmte Ortspunkte auf dem Fahrstreifen sowie deren Position definiert werden,
• die komplexen Beziehungen zwischen allen Variablen, die den Fahrstreifen, die zulässigen dynamischen Bahnkurven und besondere Punkte charakterisieren, definiert werden,
• die Bewegung des Fahrzeugs gemessen, daraus das Vorhandensein besonderer Punkte abgeleitet und die relative Bahnkurve des betreffenden Fahrzeugs bestimmt wird,
• die gemessenen Daten mit der Position besonderer Punkte beim Passieren dieser Punkte durch das Fahrzeug verglichen werden, so dass die Genauigkeit der Ortung des Fahrzeugs verbessert wird.

7. Verfahren gemäß Anspruch 6, bei welchem die besonderen Punkte durch die Kriterien Kurvenradius oder Winkel oder bemerkenswerte Höhenunterschiede festgelegt sind.

8. Verfahren gemäß Anspruch 1 bis 7, bei welchem die geometrischen Daten zur Definition des Fahrstreifens, die charakteristischen Daten des Fahrstreifens, die Daten zur Beschreibung der Bahnkurve des Fahrzeugs, die charakteristischen Fahrzeugdaten und die Variablen für die Rollgrenzen erhalten werden durch:
- Simulation, oder
- Messungen, oder
- den Fahrzeughersteller, oder
- eine unabhängige Einrichtung, welche die Qualifikationsdaten mitteilt, oder
- durch die Übertragung der Daten von Lieferanten kartographischer Daten, oder
- durch zeitgleiche oder zeitverzögerte Verarbeitung von Videobildern oder Satellitenbeobachtungen.

9. Verfahren gemäß einem der Ansprüche 1 bis 8, bei dem
- die Rollgrenzwerte mit den zeitgleich erfassten Rollwerten des Fahrzeugs verglichen werden;
- eine Warnmeldung für den Fahrer erzeugt wird, wenn einer der zeitgleichen Werte größer ist als der entsprechende Grenzwert.

10. Verfahren gemäß einem der Ansprüche 1 bis 9, bei welchem mindestens ein für den Fahrer des Fahrzeugs erkennbarer Indikator generiert wird, um diesen zu informieren über:
- eine gefährliche Bahnkurve, oder
- eine Verbesserung der Position, oder
- ein vorhandenes Bodenrelief oder eine Steigung bzw. ein Gefälle.

11. Verfahren gemäß einem der Ansprüche 1 bis 10, bei dem für den Fahrer zeitgleich mindestens ein Einflussindikator über die Sicherheit der momentanten Geschwindigkeit seines Fahrzeugs an dem gegebenen Ort und für den vorausliegenden Fahrstreifen generiert wird, wobei mindestens einer der folgenden Parameter in Betracht gezogen wird : Rollgrenzen, Bahnkurve, gesetzlich vorgeschriebene Geschwindigkeit, charakteristische Daten des Fahrstreifens und Witterungsbedingungen.

12. Verfahren gemäß einem der Ansprüche 1 bis 11, bei dem die charakteristischen Daten einer repräsentativen Anzahl von Fahrstreifen mindestens eines der folgenden Kriterien aufweisen :
- einen Haftungsparameter,
- ein Datenelement zur Gefahrenanzeige,
- ein Datenelement für die Aufforderung zum langsam fahren.

13. Verfahren gemäß Anspruch 12, bei welchem die Rollgrenzen mindestens eine der folgenden Grenzen aufweisen :
- Bremsgrenze, Beschleunigungsgrenze, Begrenzung der Weiterfahrt ;
- Anweisungen betreffend die gegenüberliegende Spur, zum Verlassen der Straße, beim Zusammenstoß mit einem Fahrzeug von vorn, beim Zusammenstoß mit einem Fahrzeug von hinten, beim Zusammenstoß mit einem Bauwerk, beim Zusammenstoß mit einem Hindernis auf der Straße und beim Zusammenstoß mit einem Fußgänger;
- Gesamthaftung, Merkmale des Rollens auf der Straße bezüglich der an Bord befindlichen Ausrüstungen, Merkmale der Straße bezüglich des Passagierkomforts, Merkmale der Straße bezüglich der Ermüdung des Fahrers ;
- Fehler und Ausfälle : Fahrweise, Fahrer, Fahrzeug und Ausrüstung des Fahrzeugs, Wahl der Einstellarten, zu korrigierende Variablen.

14. Verfahren gemäß Anspruch 2, bei dem die Rollgrenze ausgewählte Verkehrsflussgrenzen umfasst, darunter :
- eine Verlangsamung des Verkehrsflusses, eine Verlängerung des Stauendes, fließender Verkehr.

15. Verfahren gemäß Anspruch 14, bei dem der Lernprozess des Neuronennetzes folgendes umfasst :
- einen Schritt zur Abgleichung der geometrischen Daten, der kartographischen Daten, der Straßenkreuzungen, der Fahrzeugtypen, die diese Straßen befahren, der Verkehrsbeschilderung, Wechselwegweiser, Baustellenampeln, der Anzahl von Fahrzeugtypen, welche diese Straßen befahren, der Geschwindigkeit der Fahrzeugtypen, welche diese Straßen befahren, der gleichzeitig herrschenden Witterungsbedingungen, dem jeweiligen Kalendertag, der gleichzeitig auf und neben der Fahrbahn stattfindenden Ereignisse, der simultanen Unfallforschung sowie der Rollgrenzen.

16. Einrichtung zur Bestimmung der Rollgrenzen eines sich auf dem Fahrstreifen einer Verkehrsstraße bewegenden Fahrzeuges, die geeignet ist, das Verfahren gemäß einem der Ansprüche 1 bis 15 umzusetzen.

17. Einrichtung gemäß Anspruch 16 mit einer in situ feldprogrammierbaren Anordnung von Gattern (FPGA) für eine stark parallel ablaufende Datenverarbeitung.
